# EUROPÄISCHE PATENTSCHRIFT

(11) **EP 4 035 834 B1**
(45) Veröffentlichungstag und Bekanntmachung des Hinweises auf die Patenterteilung: **09.08.2023**
(21) Anmeldenummer: 22154163.4
(22) Anmeldetag: 31.01.2022
(51) Int. Cl.: B25B 23/00, B23P 19/06, B25B 29/02

(54) **ANORDNUNG AUS EINER SPANNVORRICHTUNG FÜR EINE SCHRAUBVERBINDUNG SOWIE EINER SICHERHEITSEINRICHTUNG**
ARRANGEMENT COMPRISING A CLAMPING DEVICE FOR A SCREW CONNECTION AND A SAFETY DEVICE
AGENCEMENT CONSTITUÉ D'UN DISPOSITIF DE SERRAGE POUR UNE LIAISON VISSÉE, AINSI QUE D'UN DISPOSITIF DE SÉCURITÉ

(30) Priorität: 01.02.2021 DE 102021102230
(43) Veröffentlichungstag der Anmeldung: 03.08.2022
(73) Patentinhaber: Hohmann, Frank, 59581 Warstein (DE); Hohmann, Jörg, 59872 Meschede (DE)
(72) Erfinder:
(74) Vertreter: Janke Scholl Patentanwälte PartG mbB

(56) Entgegenhaltungen:
- EP-A2- 2 072 842
- DE-A1- 3 047 674
- DE-A1- 4 341 707
- DE-T2- 69 708 091

## Beschreibung

Die Erfindung betrifft eine Anordnung aus einer Spannvorrichtung für eine Schraubverbindung sowie einer der Spannvorrichtung zugeordneten Sicherheitseinrichtung, wobei die Schraubverbindung einen Gewindebolzen und eine gegen eine Unterlage abgestützte Gewindemutter umfasst, und wobei die Spannvorrichtung zumindest aufweist
- ein die Gewindemutter umgebendes und gegen die Unterlage abgestütztes Stützrohr,
- ein in Verlängerung des Stützrohrs angeordnetes Zylindergehäuse,
- einen hydraulisch angetriebenen Kolben, welcher in dem Zylindergehäuse längs einer Achse beweglich angeordnet ist,
- eine durch den Kolben auf der Achse mitnehmbare Wechselbuchse, welche mit einem Innengewinde zum Verschrauben der Wechselbuchse mit dem Gewindebolzen versehen ist.
- einen drehbar in dem Stützrohr angeordneten und mit der Gewindemutter kraft- oder formschlüssig verbindbaren Mitnehmer.

Eine solche Anordnung ist aus der EP 2 072 842 A2 bekannt.

Beim Anziehen von Schraubverbindungen mit einer rein axial arbeitenden Spannvorrichtung werden die Gewindebolzen mit sehr hohen, in axialer Richtung wirkenden Kräften belastet. Heutzutage werden Kräfte aufgebracht, die den Werkstoff der Gewindebolzen kurzzeitig bis an seine Dehngrenze belasten. Eine 90- bis 98-prozentige Ausnutzung der herstellerseitigen Zugbelastung ist der Regelfall für viele Anziehvorgänge. Teilweise gibt es bereits Überlegungen, Gewindebolzen sogar über die empfohlene Zugbelastung hinaus vorzuspannen.

Trotz stetig verbesserten Herstellungsmöglichkeiten und einer damit einhergehenden steigenden Qualität der Gewindebolzen kommt es dennoch beim Verschraubungsprozess mit axialen Spannvorrichtungen in seltenen Fällen vor, dass Gewindebolzen unerwartet brechen bzw. reißen. Dies kann verschiedenste Gründe haben, so beispielsweise unzureichende Materialeigenschaften des Schraubenwerkstoffes, Risse, Fehler beim Beschichtungsprozess und Korrosion.

Ferner kann es auch zu einem Bruch des Gewindebolzens führen, wenn die Wechselbuchse bei der Montage nicht ausreichend weit auf den zu verspannenden Bolzen aufgeschraubt wurde. Dies resultiert aus einer unzureichenden Gewindeabdeckung zwischen Gewindebolzen und Wechselbuchse.

In einem solchen Fall entlädt sich die zum Zeitpunkt des Versagens gespeicherte Energie der Schraubenverbindung abrupt. Je nach Größe der aufgebrachten Kraft und der Beschaffenheit der Schraubverbindung kann die Spannvorrichtung dadurch über viele Meter verspringen. Sollten Personen von dem zumeist schweren Werkzeug getroffen werden, besteht ein lebensgefährliches Verletzungsrisiko. Zwar sollten Monteure einen ausreichend großen Sicherheitsabstand während des Druckaufbaus der Spannvorrichtung wahren, jedoch ist dies aus unterschiedlichen Gründen nicht immer möglich. Zudem kann die "Flugrichtung" des Werkzeuges nicht exakt vorhergesehen werden.

Schutzvorrichtungen, die eine axial arbeitende Spannvorrichtung beim Bruch eines Gewindebolzens daran hindern zu verspringen, sind bekannt. So wird beispielsweise in der DE 10 2007 062 615 A1 eine Mutter für Verschraubungen vorgeschlagen, die sich in Umfangsrichtung aus gleichgroßen, in Trennebenen aneinanderstoßenden und zwischen einer Öffnungs- und einer Schließstellung beweglich zueinander geführten Mutterhälften zusammensetzt. Die Mutterhälften sind zueinander schwenkbar und hierzu in einem ersten Endbereich schwenkbeweglich miteinander verbunden. Zum gegeneinander Fahren der Mutterhälften in ihre Schließstellung dient ein Hebel.

Die Mutter wird an einem dem zu spannenden Gewindebolzen benachbarten Gewindebolzen festgelegt und ist über einen reißfesten Gurt mit der Spannvorrichtung verbunden. Die Länge des Gurtes ist möglichst kurz, um bei einem Bruch des zu verschraubenden Gewindebolzens und einem damit einhergehenden Verspringen der Spannvorrichtung den potentiellen Weg gering zu halten.

Nachteilig bei dem Vorschlag nach DE 10 2007 062 615 A1 ist, dass, wenn auch eingeschränkt, ein Verspringen der Spannvorrichtung bei dem Bruch eines zu verspannenden Gewindebolzens immer noch möglich ist. Sollte ein Monteur nicht den vorschriftsgemäßen Abstand eingehalten haben, besteht nach wie vor ein hohes Verletzungsrisiko. Erschwerend kommt hinzu, dass gerade aufgrund der Verbindung der Spannvorrichtung mit der Mutter die Spannvorrichtung im Falle eines Bruches eine unkontrollierte Bewegung mit hohem Verletzungsrisiko durchführen kann.

Um ein Verspringen der Spannvorrichtung zu vermeiden, ist es in der Praxis sogar notwendig, eine weitere, zusätzliche Mutter auf einem weiteren Gewindebolzen aufzuschrauben, der auf der anderen Seite der Spannvorrichtung zu dieser benachbart ist. Auch diese Mutter wird durch einen eigenen Gurt mit der Spannvorrichtung verbunden. Dies bedingt ein erheblichen zusätzlichen Montageaufwand, da zu beiden Seiten der Spannvorrichtung je eine Mutter aufgeschraubt und jeweils über einen Gurt mit der Spannvorrichtung verbunden werden muss.

Die **Aufgabe** der Erfindung besteht darin, die Anordnung aus einer Spannvorrichtung und einer Sicherheitseinrichtung derart weiterzuentwickeln, dass ein unkalkulierbares Verspringen der Spannvorrichtung im Falle eines Bruches des zu spannenden Gewindebolzens verhindert wird, wobei der mit der Anordnung aus Spannvorrichtung und Sicherheitseinrichtung verbundene Montageaufwand gering bleiben soll.

Zur Lös u n g der Aufgabe wird bei einer Anordnung bestehend aus einer Spannvorrichtung und aus einer Sicherheitseinrichtung mit den eingangs genannten Merkmalen vorgeschlagen, dass Bestandteile der Sicherheitseinrichtung eine Gewindehülse und ein Schutzarm sind, wobei die Gewindehülse außerhalb des Zylindergehäuses und des Stützrohrs angeordnet und mit einem Innengewinde für einen Eingriff an einem dem Gewindebolzen benachbarten Gewindebolzen einer anderen Schraubverbindung ausgebildet ist, und wobei der Schutzarm an der Gewindehülse befestigt ist und sich bis über das Zylindergehäuse der Spannvorrichtung erstreckt.

Mit anderen Worten ist die Sicherheitseinrichtung dazu ausgebildet, ein unkontrollierbares Verspringen der Spannvorrichtung zu verhindern, indem sie an einem Gewindebolzen fixiert wird, der dem zu verschraubenden Gewindebolzen benachbart ist, und indem sich der Schutzarm vorzugsweise bis über die dem Stützrohr abgewandte Stirnseite des Zylindergehäuses erstreckt. Bevorzugt ist, dass sich der Schutzarm vollständig über die dem Stützrohr abgewandte Stirnseite des Zylindergehäuses erstreckt.

Zunächst wird die Spannvorrichtung wie üblich an dem zu verspannenden Gewindebolzen installiert und auch sonst wie üblich vorbereitet. Anschließend wird die Gewindehülse der Sicherheitseinrichtung an dem Gewindebolzen einer anderen, benachbarten Schraubverbindung so befestigt, dass sich der Schutzarm der Sicherheitseinrichtung über das Zylindergehäuse der Spannvorrichtung erstreckt.

Mindestens ragt der Schutzarm der Sicherheitseinrichtung so weit über das Zylindergehäuse, dass der Schutzarm bis über die Umfangskontur des Zylindergehäuses reicht. Vorzugsweise jedoch ist der Schutzarm von einer solchen Länge, dass er weit über das Zylindergehäuse reicht, vorzugsweise sogar über die gesamte Umfangskontur des Zylindergehäuses.

Bei der Gewindehülse handelt es sich um eine z.B. längliche Hülse mit zumindest einem Ende, an dem sich ein Innengewinde befindet. Das Innengewinde ist komplementär zu dem entsprechenden Gewindebolzen ausgebildet und wird auf den zu der Spannvorrichtung benachbarten Gewindebolzen aufgeschraubt, oder alternativ auf dessen Gewinde durch Formschluss aufgesteckt.

Gemäß einer Ausführungsform sind Bestandteil der Gewindehülse mindestens zwei, in einer Trennebene aneinanderstoßende und zwischen einer Öffnungs- und einer Schließstellung beweglich zueinander geführte Segmente, die die Gewindehülse in einer Riegelstellung an dem Gewindebolzen festlegen oder in einer Freigabestellung freigeben. Die Segmente sind mit ihrer gewindebolzenabgewandten Seite schwenkbeweglich an der Gewindehülse gelagert, wobei im Fall zweier solcher Segmente deren Schwenkachsen parallel zueinander verlaufen.

Vorzugsweise werden die mindestens zwei zueinander beweglich geführten Segmente in der Riegelstellung oder in der Freigabestellung durch einen in Richtung der Längsachse der Gewindehülse beweglichen Ring arretiert.

Möglich ist jedoch auch eine größere Anzahl an Segmenten, z. B. drei Segmente, wobei die Lage von deren Schwenkachsen dann entsprechend ihrer Anzahl zueinander angepasst sind.

Der Vorteil dieser Ausführungsform der Gewindehülse besteht darin, dass ein zeitaufwändiges Aufschrauben auf einen Gewindebolzen vermieden wird, sondern lediglich ein Einrasten der Gewindehülse auf einem Gewindebolzen notwendig ist. Dies wird durch ein manuelles Aufschieben, bzw. Aufpressen erreicht. Zum Entfernen der Gewindehülse von dem Gewindebolzen wird der Ring in die Freigabestellung überführt, so dass sich die Segmente wieder Aufspreizen lassen und den Gewindebolzen freigeben.

Um nach der Installation der Sicherheitseinrichtung trotz des sich über die Stirnseite des Zylindergehäuses erstreckenden Schutzarms noch an die Stirnseite des Zylindergehäuses und dort angeordnete Bauteile zu gelangen, weist der Schutzarm vorzugsweise eine Öffnung auf, die einen darunter angeordneten Antriebsabschnitt der Spannvorrichtung freilegt, d. h. freilässt.

Bevorzugt ist spannvorrichtungsseitig zusätzlich eine in ihrer Gestaltung an die Stirnseite des Zylindergehäuses angepasste Formschlussplatte an dem Schutzarm angeordnet. Durch das Gegenüberliegen der Formschlussplatte zu der Stirnseite des Zylindergehäuses wird eine Art Formschluss zu dem Zylindergehäuse hergestellt. Die komplementären Strukturen können, neben der gewissen vertikalen Festlegung durch die Anpassung der Gestaltung der Formschlussplatte an die Gestaltung der Stirnseite der Spannvorrichtung, auch eine gewisse Festlegung in horizontaler Richtung erzielen.

Vorzugsweise erstreckt sich die Formschlussplatte über die gesamte Stirnseite, wobei sich in einer alternativen Ausführungsform die Formschlussplatte bevorzugt nur über einen Teil der Stirnseite erstreckt.

Um trotz der Formschlussplatte an wichtige Bedienungselemente wie z. B. an den Antriebsabschnitt im Zylindergehäuse zu gelangen, weist die Formschlussplatte vorzugsweise eine zu der Öffnung des Schutzarms fluchtende Öffnung auf.

In der Praxis ist oft eine Vielzahl zu spannender oder nachzuspannender Schraubverbindungen in Reihe längs eines Ringflansches angeordnet. Der Aufbau aller dieser Schraubverbindungen ist identisch, häufig weisen ihre Verschraubungsachsen gleiche Abstände zueinander auf.

Allerdings können bei anderen Flanschverbindungen die Abstände der Schraubverbindungen zueinander auch unterschiedlich sein. Auch kann es durchaus innerhalb einer Flanschverbindung bei den Abständen zu einer zwar kleinen, aber merklichen Varianz kommen. Um die Anordnung aus der Spannvorrichtung und der Sicherheitseinrichtung auch bei verschiedenen Abständen der Gewindebolzen zueinander verwenden zu können, kann der Schutzarm quer zu der Achse des Zylindergehäuses verstellbar an der Gewindehülse befestigt sein. Somit ist, abhängig von der Verschraubungssituation, der Abstand zwischen der Spannvorrichtung und der Gewindehülse entsprechend dem Abstand der Gewindebolzen anpassbar.

Gewindehülsenseitig ist der Schutzarm beispielsweise mit einem Langloch ausgebildet, welches sich von der Gewindehülse in Richtung Spannvorrichtung erstreckt. Vorzugsweise weist die Gewindehülse zur querbeweglichen Aufnahme des Schutzarms eine umlaufende Nut auf, wobei die Gewindehülse über die Nut drehbeweglich in dem Schutzarm gelagert ist. Somit ist die Gewindehülse, gemäß einem Loslager, entlang ihrer Längsachse führbar in der Nut des Schutzarms aufgenommen.

Die Gewindehülse kann um ihre Achse drehbar gegenüber dem Schutzarm ausgebildet sein. Dies ermöglicht ein Zentrieren der Formschlussplatte zur Stirnseite des Zylindergehäuses bei gleichzeitigem Verschrauben der Gewindehülse an dem benachbarten Gewindebolzen.

Bei einem Bruch eines durch die Spannvorrichtung belasteten Gewindebolzens wird die aus dem Bruch plötzlich freiwerdenden kinetischen Energie der Spannvorrichtung über die Formschlussplatte und den Schutzarm in die Gewindehülse an den benachbarten Gewindebolzen abgegeben. Da vorzugsweise der Schutzarm und/oder die Formschlussplatte eine gegenüber der Gewindehülse verringerte Biegesteifigkeit aufweisen, bzw. aufweist, verformt sich der Schutzarm und/oder die Formschlussplatte durch den Impuls, wodurch die Spannvorrichtung, der benachbarte Gewindebolzen oder die Gewindehülse geschont wird.

Der benachbarte Gewindebolzen ist der unmittelbar nächste oder der nicht unmittelbar nächste zu jenem Gewindebolzen, an dem die Spannvorrichtung montiert ist. Mithin kann die Gewindehülse auch auf dem übernächsten Gewindebolzen installiert werden, wobei die Länge des Schutzarms dementsprechend anzupassen ist. Die Abstandsvergrößerung zwischen der Spannvorrichtung und der Gewindehülse und der damit einhergehenden Verlängerung des Schutzarms hat den positiven Effekt, dass dieser deutlich mehr kinetische Energie in Form von Verformung absorbieren kann im Vergleich zu einem kürzeren Schutzarm. Somit kann die Gefahr einer potentiellen Beschädigung der Spannvorrichtung, der Gewindehülse und des Gewindebolzens, an dem die Gewindehülse anliegt, verringert werden.

Bevorzugt ist die Nut teils aus der Gewindehülse und teils aus einem am schutzarmseitigen Ende der Gewindehülse befestigten Endstück gebildet, wobei das Endstück abnehmbar an der Gewindehülse befestigt ist.

Nach einem Bruch eines Gewindebolzens und der daraus resultierenden Verformung des Schutzarms und gegebenenfalls auch der Formschlussplatte, wird das Endstück von der Gewindehülse gelöst und der verformte Schutzarm kann durch einen neuen, unverformten Schutzarm ersetzt werden.

Denkbar ist jedoch auch, dass der Schutzarm, die Formschlussplatte und die Gewindehülse eine identische oder zumindest vergleichbare Biegesteifigkeit aufweisen. Damit würde sich gegebenenfalls die gesamte Sicherheitseinrichtung im Fall eines Bruchs des Gewindebolzens verformen und müsste als Ganzes ersetzt werden.

Weitere Maßnahmen werden nachstehend gemeinsam mit der Beschreibung zweier bevorzugter Ausführungsbeispiele der Erfindung anhand der Figuren erläutert. Dabei zeigt:
- Figur 1: einen schematischen Querschnitt durch eine aus dem Stand der Technik bekannte Spannvorrichtung,
- Figur 2: eine Frontansicht der Spannvorrichtung und einer Sicherheitseinrichtung im am Gewindebolzen installierten Zustand,
- Figur 3: eine perspektivische Ansicht der Sicherheitseinrichtung
- Figur 4: eine Frontansicht der Gewindehülse mit gespreizten Segmenten gemäß einer zweiten Ausführungsform,
- Figur 5: eine Frontansicht der Gewindehülse mit geschlossenen Segmenten gemäß einer zweiten Ausführungsform, und
- Figur 6: eine Ansicht eines Teilschnitts der Sicherheitseinrichtung.

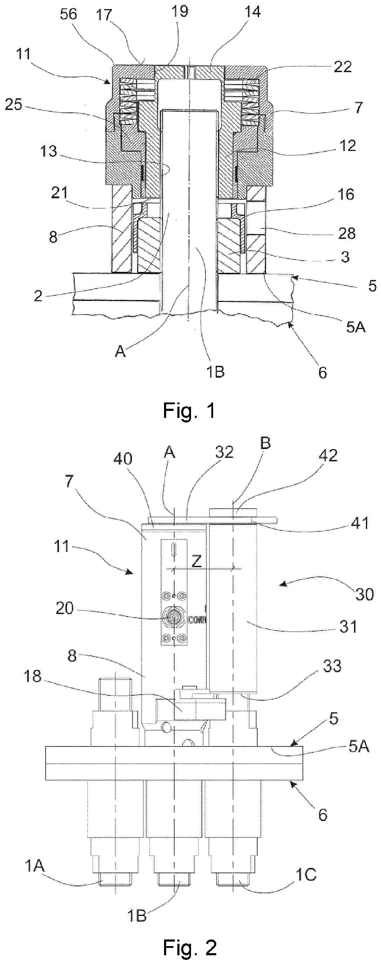

Gemäß den Figuren 1 und 2 umfassen mehrere Schraubverbindungen jeweils Gewindebolzen 1A, 1B, 1C, die sich zum Beispiel aus einem erweiterten Bolzenkopf, einem Schaftabschnitt und einem Gewindeabschnitt zusammensetzen, sowie aus einer auf den Gewindeabschnitt des jeweiligen Gewindebolzens 1A, 1B, 1C aufgeschraubten Gewindemutter 3. Die in Reihe angeordneten Schraubverbindungen dienen dazu, zwei Maschinen- oder Anlagenteile fest gegeneinander zu verspannen, bei denen es sich gemäß Figur 1 um zwei flach gegeneinander abgestützte Ringflansche 5, 6 handelt. Die Mutter 3 der Schraubverbindung stützt sich dabei an der Außenseite des Ringflansches 5 als Unterlage 5A ab.

Neben dem Gewindebolzen 1A, 1B, 1C und der jeweils darauf aufgeschraubten Gewindemutter 3 können weitere Elemente Bestandteile der Schraubverbindung sein, beispielsweise eine weitere Gewindemutter auf der der Gewindemutter 3 abgewandten Seite der zu verspannenden Ringflansche 5, 6. Auch zusätzliche Unterlegscheiben oder -Ringe zwischen Mutter 3 und Unterlage 5A können Bestandteil der jeweiligen Schraubverbindung sein.

Mittels einer Spannvorrichtung 11 lässt sich jede der Schraubverbindungen, z. B. bei Figur 2 die mittlere der drei dargestellten Schraubverbindungen, durch Aufbringen einer ausschließlich axialen Zugkraft in Schraubenlängsrichtung dehnen, d.h. längen. Dabei wird der betreffende Gewindebolzen 1B durch axialen Zug an dem über die Gewindemutter 3 hinausragenden Gewindeendabschnitt 2 des Gewindebolzens 1B längsgedehnt. Diese Dehnung erfasst vor allem den Schaft- und den Gewindeabschnitt des Gewindebolzens 1B. Die dabei aufgewendete Anzugskraft und/oder der mittels einer entsprechenden Hydraulik aufgewendete Anzugsdruck kann unter Einsatz einer Steuer- und Auswerteeinheit automatisch in einem Dokumentationsmodul gespeichert werden, und steht so für spätere Prüfzwecke zur Verfügung.

Während durch die Aktivierung des Spannvorrichtung 11 für eine gewisse Zeit eine vorgegebene Vorspannkraft auf den Gewindebolzen 1B ausgeübt wird, kann die Gewindemutter 3 angezogen bzw. nachgezogen werden. Dieses sogenannte Beidrehen der Mutter 3 erfolgt entweder mittels eines elektromotorischen Antriebs oder von Hand mittels eines geeigneten Handwerkzeugs, z. B. eines Mehrkantschlüssels mit oder ohne integriertem Ratschenmechanismus. Auch das für das Beidrehen der Mutter 3 tatsächlich aufgewendete Anzugsmoment kann automatisch in dem Dokumentationsmodul gespeichert werden.

Eine zentral in einem Zylindergehäuse 7 der Spannvorrichtung 11 längsbeweglich angeordnete Wechselbuchse 12 ist an einem Ende mit einem Innengewinde 13 versehen. Mit dem Innengewinde 13 wird die Wechselbuchse 12 vor dem Spannprozess auf den über die Mutter 3 hinausragenden Gewindeendabschnitt 2 des Gewindebolzens 1B aufgeschraubt. Dieses Aufschrauben kann z. B. ebenfalls mit dem bereits erwähnten Werkzeug erfolgen, wozu die Wechselbuchse 12 an ihrem anderen, der Unterlage 5A abgewandten Ende mit einem an oder in der äußeren Stirnseite 17 des Zylindergehäuses 7 angeordneten Antriebsabschnitt 14 versehen ist. An dem Antriebsabschnitt 14 befindet sich ein Mehrkant, an den sich das Werkzeug zum Drehen der Wechselbuchse 12 ansetzen lässt.

Beim Spannprozess wird die auf den jeweiligen Gewindebolzen 1B aufgeschraubte Wechselbuchse 12 unter Einsatz starken Hydraulikdrucks unter axialen Zug gesetzt, wodurch sich der Gewindebolzen 1B in seiner Längsrichtung dehnt. Infolge dessen kommt die Unterseite der Mutter 3 von der Unterlage 5A frei. In diesem Zustand lässt sich die Mutter 3 mit relativ wenig Widerstand drehen und bis zu ihrer erneuten, spaltfreien Auflage auf der Unterlage 5A beidrehen, z. B. mittels des beschriebenen Handwerkzeugs.

Dessen Dreh- oder Schwenkbewegung kann über eine zwischengeschaltete und in Figur 2 dargestellte Getriebeanordnung 18 in eine Drehbewegung der Gewindemutter 3 übertragen wird.

Das unmittelbare Drehen der Mutter 3 erfolgt durch einen in einem Stützrohr 8 der Spannvorrichtung 11 gelagerten Mitnehmer 16. Der Mitnehmer 16 ist bei der hier beschriebenen Ausführungsform eine die Mutter 3 umgebende Drehhülse, die an ihrer Innenseite mit Formschlussstrukturen versehen ist und insbesondere mit einem Sechskant, der den an der Mutter 3 angeformten Sechskant formschlüssig umgreift.

Angetrieben wird der Mitnehmer bzw. die Drehhülse 16 mittels der Getriebeanordnung 18, die sich größtenteils in einem Antriebsgehäuse außen an dem Stützrohr 8 der Spannvorrichtung 11 befindet. Zum Drehen der Drehhülse 16 weist das Stützrohr 8 auf jenem Umfangsbereich, auf dem sich das Antriebsgehäuse mit der Getriebeanordnung 18 befindet, eine Öffnung 28 auf. Durch die Öffnung 28 hindurch wird daher die Drehhülse 16 angetrieben. Die Getriebeanordnung 18 bildet zusammen mit der Drehhülse 16 die Einrichtung zum Beidrehen der Mutter 3. Die Mutter 3 kann natürlich nur für die Dauer des axialen Längsdehnens des Gewindebolzens 1B sinnvoll beigedreht werden.

Umschlossen ist der hydraulische Spannmechanismus von dem druckfesten Zylindergehäuse 7. Dessen starre Fortsetzung nach unten bildet das die Gewindemutter 3 umgebende Stützrohr 8. Das Stützrohr 8 kann einstückig mit dem Zylindergehäuse 7 sein, oder ein gegenüber dem Zylindergehäuse 7 separates, z. B. ein daran angesetztes Bauteil. Das Stützrohr 8 ist nach unten offen und stützt sich mit seiner ringförmigen Unterseite auf jener festen Unterlage 5A ab, auf der sich auch die Mutter 3 mit ihrer Unterseite abstützt.

An dem Zylindergehäuse 7 befindet sich ein Hydraulikanschluss 20, über den ein hydraulischer Arbeitsraum 21 ventilgesteuert mit einer externen Hydraulikversorgung, zum Beispiel einer Hydraulikpumpe, verbunden ist. In dem Zylindergehäuse 7 ist, zu der Zylinderinnenwand hin abgedichtet, ein Kolben 25 angeordnet. Der Kolben 25 ist auf der Achse A des Gewindebolzens 1B längsbeweglich in dem Zylindergehäuse 7 angeordnet. Durch Einspeisen von hydraulischem Druckmedium in den hydraulischen Arbeitsraum 21 hebt der Kolben 25 an. Dies kann beispielsweise entgegen der Kraft einer den Kolben 25 von oben her beaufschlagenden Feder 22 erfolgen, die als Kolbenrückstellfeder dient und bestrebt ist, den Kolben 25 in seiner Grundstellung zu halten, in welcher der hydraulische Arbeitsraum 21 sein Minimum hat.

Der Kolben 25 hat die Gestalt eines Rings und umgibt koaxial die Wechselbuchse 12. Der Kolben 25 ist an seinem Innenrand mit einem Absatz oder einer Stufe versehen, die, der Unterlage 5A abgewandt, eine Mitnehmerfläche bildet, an der sich die Wechselbuchse 12 abstützt. Speist die Hydraulikpumpe Druckfluid in den Arbeitsraum 21, so hebt der Kolben 25 an und nimmt dabei die Wechselbuchse 12 in Längsrichtung mit. Es kommt somit, auf der Achse A, zum Längsdehnen des Gewindebolzens 1B.

Die Wechselbuchse 12 ist an ihrem bolzenseitigen Ende mit dem Innengewinde 13 zum Aufschrauben auf den jeweiligen Endabschnitt 2 des Gewindebolzens 1B versehen. An ihrem anderen Ende ist die Wechselbuchse 12 mit dem Antriebsabschnitt 14 versehen, über den sich bei der Vorbereitung des Spannprozesses die Wechselbuchse 12 drehen, und dadurch auf den Endabschnitt 2 des Gewindebolzens 1B aufschrauben lässt.

Der Antriebsabschnitt 14 ist durch eine stirnseitige Öffnung 19 in dem Zylindergehäuse 7 bspw. für das zuvor beschrieben Handwerkzeug, zwecks Verschrauben der Wechselbuchse 12 mit dem Gewindeendabschnitt 2 zugänglich.

Bei bereits fest auf dem Gewindebolzen 1B installierter Spannvorrichtung 11 wird anschließend, aber vor dem Spannprozess, eine Sicherheitseinrichtung 30, die eine Gewindehülse 31 mit einem Schutzarm 32 umfasst, auf einem zu der Spannvorrichtung 11 benachbarten Gewindebolzen aufgeschraubt. Dieser benachbarte Gewindebolzen ist hier der Gewindebolzen 1C.

Die Gewindehülse 31 besteht aus einem länglichen, zylindrischen Körper mit einer durchgehenden Bohrung. An dem flanschseitigen Ende des Zylinders ist ein Innengewinde 33 in der Durchgangsbohrung ausgebildet. Dieses ist komplementär zu den Außengewinden der Gewindebolzen 1A, 1B, 1C, lässt sich daher auf diese aufschrauben.

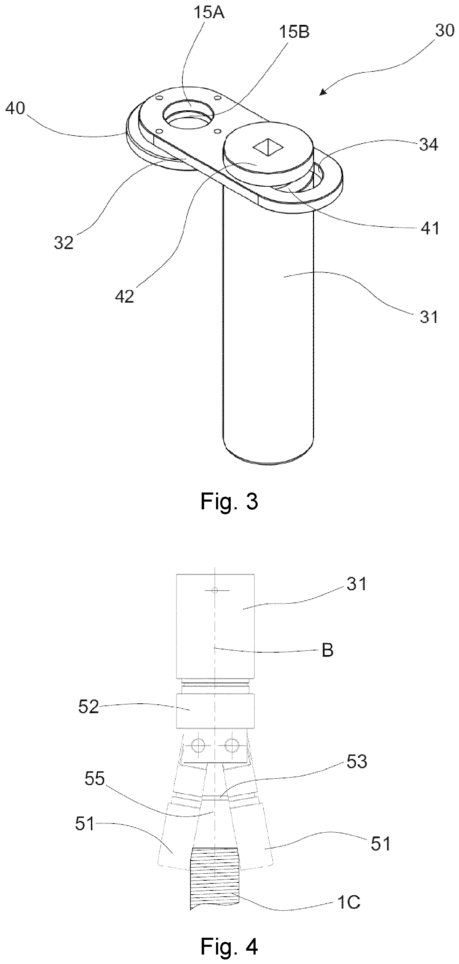

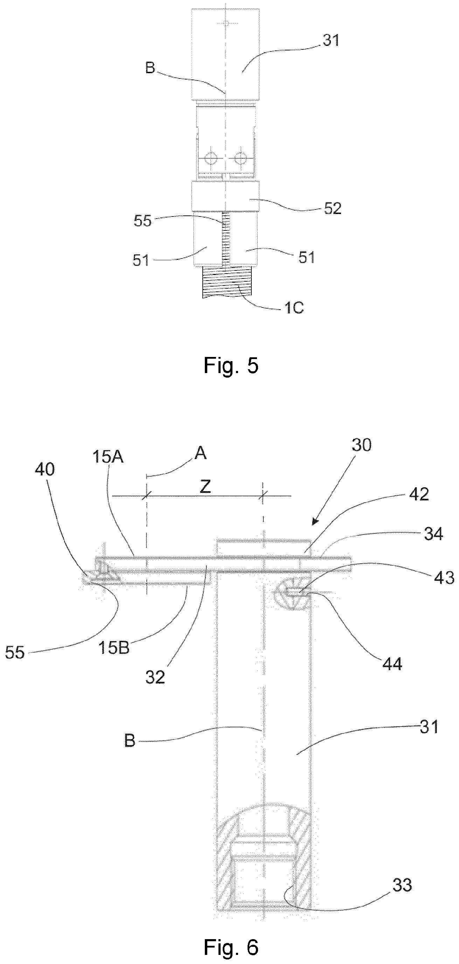

Die Figuren 4 und 5 zeigen eine zweite Ausführungsform der Gewindehülse 31, hier in einer mehrteiligen Form. Die Gewindehülse 31 weist an ihrem dem Schutzarm 32 abgewandten Ende zwei Segmente 51 auf, die jeweils an ihrem oberen Ende schwenkbeweglich am zum Schutzarm 32 zugewandten Ende der Gewindehülse 31 gelagert sind. Die zwei Segmente 51 sind mit ihrer Innenseite komplementär zu jeweils einer Hälfte des Gewindebolzens 1C ausgebildet. Um ein erstes Arretieren der Segmente 51 an dem Gewindebolzen 1C sicherzustellen, sind die beiden Segmente 51 durch ein Federelement 53 miteinander verbunden, welches beide Segmente 51 zueinander hin, in eine geschlossene Position zwingt. Dies führt dazu, dass beim Aufpressen der Gewindehülse 31 auf einem zur von der Spannvorrichtung 11 besetzten benachbarten Gewindebolzen 1C, sich die Segmente 51 zunächst aufspreizen. Ist die Gewindehülse 31 in die für die Arretierstellung geeignete Position gelangt, sind die Segmente 51 wieder zusammengezogen und bilden eine formschlüssige Verbindung mit dem Gewindebolzen 1C, indem sie sich formschlüssig um den Gewindebolzen 1C legen.

Um den formschlüssigen Eingriff zwischen den Segmenten 51 der Gewindehülse 31 und dem Gewinde des Gewindebolzens 1C sicherzustellen, wird gemäß Figur 5 ein axial beweglicher Ring 52 von der oberen, einteiligen Gewindehülse 31 auf die nun zu dieser, im geschlossenen Zustand, fluchtenden Segmente 51 geschoben. Dadurch wird ein Aufspreizen und ein damit einhergehender Verlust des Eingriffs der Gewindehülse 31 an dem Gewindebolzen 1C blockiert und so ausgeschlossen.

Am dem dem Gewindebolzen 1C abgewandten Ende der Gewindehülse 31 ist an dieser ein Schutzarm 32 befestigt bzw. gelagert. Der Schutzarm 32 erstreckt sich bis über die Spannvorrichtung 11 und liegt mittelbar auf der Stirnseite 17 des Zylindergehäuses 7 auf. Spannvorrichtungsseitig ist zur Stirnseite 17 des Zylindergehäuses 7 hin eine Formschlussplatte 40 an dem Schutzarm 32 befestigt, wobei sich die Formschlussplatte 40 beim Verschrauben der Gewindehülse 31 auf dem Gewindebolzen 1C mehr und mehr auf die Stirnseite 17 des Zylindergehäuses 7 absenkt.

Gemäß Figur 6 weist die Formschlussplatte 40 auf ihrer zur Spannvorrichtung 11 weisenden Seite einen umlaufende Konus 55 auf, der zu einer, siehe Figur 1, ebenfalls umlaufenden Fase 56 an der Stirnseite 17 des Zylindergehäuses 7 komplementär ausgebildet ist. Daher wird durch das Aufliegen der Formschlussplatte 40 auf der Stirnseite 17 des Zylindergehäuses 7 und durch den zu der umlaufenden Fase 56 komplementären Konus 55 ein Formschluss zwischen dem Zylindergehäuse 7 und der Formschlussplatte 40 hergestellt. Die Fase 56 und der Konus 55 erzielen, da sie einander komplementär gestaltet sind, neben der vertikalen Festlegung durch die Anlage zwischen Formschlussplatte 40 und Stirnseite 17 der Spannvorrichtung 11 auch eine gewisse Festlegung in horizontaler Richtung.

Zwar findet eine Bruchausbreitung bei Stahl nahe der Schallgeschwindigkeit in Luft statt, dennoch ist der Ausgangspunkt des Bruches in der anschließenden Fortbewegungsrichtung des abgebrochenen Stahlstückes nachvollziehbar. Folglich weist das gebrochene Stahlstück, bezogen auf die Anordnung, neben einer vertikalen auch eine horizontale Bewegungskomponente auf. Durch die zusätzliche, horizontale Festlegung mittels komplementär zueinander ausgebildetem Konus 55 und Fase 56 wird ein seitliches Herausspringen der Spannvorrichtung 11 vermieden. Ein mögliches Verletzungsrisiko eines Monteurs wird verringert.

Im seltenen Fall eines Bruchs oder Reißens des zu spannenden Gewindebolzens 1B wird die plötzlich freiwerdende kinetische Energie der Spannvorrichtung 11 über die Formschlussplatte 40 und den Schutzarm 32 in die Gewindehülse 31 und damit letztlich an den Gewindebolzen 1C abgegeben. Da der Schutzarm 32 im Vergleich zu der Gewindehülse 31 eine geringere Biegesteifigkeit aufweist, verformt sich der Schutzarm 32 oder zusätzlich noch die Formschlussplatte 40 durch den Impuls, wodurch die Spannvorrichtung 11, der benachbarte Gewindebolzen 1C und/oder die Gewindehülse 31 geschont werden.

Um auch bei Vorhandensein der Formschlussplatte 40 und des Schutzarms 32 die Zugänglichkeit zum Antriebsabschnitt 14 sicherzustellen, sind in fluchtender Anordnung zu einer Öffnung 19 auf der Stirnseite 17 des Zylindergehäuses 7 Öffnungen 15B, 15A in der Formschlussplatte 40 und in dem Schutzarm 32 vorgesehen. Dabei befindet sich die Öffnung 15A in dem Schutzarm 32 und die Öffnung 15B in der Formschlussplatte 40.

Im Schutzarm 32 ist ein Langloch 34 ausgebildet, welches sich von der Gewindehülse 31 horizontal in Richtung Spannvorrichtung 11 erstreckt. Das Langloch 34 ist mit seiner Innenseite in einer an der Gewindehülse 31 umlaufenden Nut 41 gelagert. Somit ist die Gewindehülse 31 auf ihrer Längsachse B drehbar an dem Schutzarm 32 gelagert. Dadurch ermöglicht wird ein Zentrieren der Formschlussplatte 40 gegenüber der Stirnseite 17 des Zylindergehäuses 7 bei gleichzeitigem Verschrauben der Gewindehülse 31 mit dem Gewindebolzen 1C. Für eine erhöhte Griffigkeit der Gewindehülse 31 beim Verschrauben kann es von Vorteil sein, wenn diese außen mit einer Riffelung oder einer Gummierung versehen ist.

Zudem ermöglicht das Langloch 34 eine horizontale Einstellbarkeit des Schutzarms 32, wodurch der Abstand Z zwischen der Gewindehülse 31 und der Formschlussplatte 40 eingestellt werden kann. Somit ist die Anordnung aus Spannvorrichtung 11 und Sicherheitseinrichtung 30 geeignet, an unterschiedliche Abstände zwischen den Gewindebolzen 1A, 1B, 1C angepasst zu werden.

Die Nut 41 wird gebildet aus der Gewindehülse 31 und einem an ihrem schutzarmseitigen Ende befestigten Endstück 42. Die Gewindehülse 31 bildet mit ihrem oberen Ende die untere Flanke der Nut 41.

Das Endstück 42 weist einen zylindrischen Abschnitt auf, der zum Teil in der Gewindehülse 31 arretiert ist. Ein aus der Gewindehülse 31 herausragender Teil des Endstücks 42 bildet den umlaufenden Boden der Nut 41, wobei sich ein weiterer, daran anschließender Bereich des aus der Gewindehülse 31 herausragenden Teils des Endstücks 42 wieder auf den Radius der Gewindehülse 31 aufweitet. Der aufgeweitete Teil des Endstücks 42 bildet mit seiner Unterseite die obere Flanke der Nut 41. Dadurch ist der Schutzarm 32 durch das Endstück 42 horizontal beweglich gelagert, und auf diese Weise in horizontaler Richtung einstellbar an der Gewindehülse 31 gelagert.

Das Endstück 42 weist auf seiner der Gewindehülse 31 abgewandten Seite einen Mehrkant auf, an den sich ein Werkzeug ansetzen lässt. Der Mehrkant ist von gleicher Form und Größe wie der Mehrkant an dem Antriebsabschnitt 14, so dass sich dasselbe Werkzeug ansetzen lässt, das zum Anziehen der Wechselbuchse 12 verwendet wird.

Um ein Herausrutschen bzw. Durchdrehen des Endstückes 42 aus, bzw. in der Gewindehülse 31 auszuschließen, ist der zylindrische Abschnitt des Endstückes 42 in der Gewindehülse 31 arretiert, und mit zwei Madenschrauben 43 gesichert. Um eine Kraftübertragung zwischen dem Endstück 42 und der Gewindehülse 31 beim Anziehen durch das zuvor beschriebene Werkzeug sicherzustellen, bzw. ein Durchrutschen des Endstückes 42 in der Gewindehülse 31 auszuschließen, weisen sowohl die Gewindehülse 31 als auch das Endstück 42 zueinander fluchtende Gewindebohrungen 44 auf, um so mittels der Madenschraube 43 einen Formschluss zu erzeugen.

### Bezugszeichenliste

- 1A: Gewindebolzen
- 1B: Gewindebolzen
- 1C: Gewindebolzen
- 2: Gewindeendabschnitt
- 3: Gewindemutter

- 5: erster Flansch
- 5A: Unterlage erster Flansch
- 6: zweiter Flansch
- 7: Zylindergehäuse
- 8: Stützrohr

- 11: Spannvorrichtung
- 12: Wechselbuchse
- 13: Innengewinde
- 14: Antriebsabschnitt
- 15A: Öffnung Schutzarm

- 15B: Öffnung Formschlussplatte
- 16: Mitnehmer
- 17: Stirnseite des Zylindergehäuses
- 18: Getriebeanordnung
- 19: Öffnung Antriebsabschnitt

- 20: Hydraulikanschluss
- 21: Arbeitsraum
- 22: Feder
- 25: Kolben
- 28: Öffnung

- 30: Sicherheitseinrichtung
- 31: Gewindehülse
- 32: Schutzarm
- 33: Innengewinde
- 34: Langloch

- 40: Formschlussplatte
- 41: Nut
- 42: Endstück
- 43: Madenschraube
- 44: Gewindebohrung

- 50: Trennebene
- 51: Segment
- 52: Ring
- 53: Federelement
- 55: Konus

- 56: Fase

- A: Achse Spannvorrichtung
- B: Achse Gewindehülse
- Z: Abstand

## Patentansprüche

1. Anordnung aus einer Spannvorrichtung (11) für eine Schraubverbindung sowie einer der Spannvorrichtung (11) zugeordneten Sicherheitseinrichtung (30), wobei die Schraubverbindung einen Gewindebolzen (1B) und eine gegen eine Unterlage (5A) abgestützte Gewindemutter (3) umfasst, und wobei die Spannvorrichtung (11) zumindest aufweist
- ein die Gewindemutter (3) umgebendes und gegen die Unterlage (5A) abgestütztes Stützrohr (8),
- ein in Verlängerung des Stützrohrs (8) angeordnetes Zylindergehäuse (7),
- einen hydraulisch angetriebenen Kolben (25), welcher in dem Zylindergehäuse (7) längs einer Achse (A) beweglich angeordnet ist,
- eine durch den Kolben (25) auf der Achse (A) mitnehmbare Wechselbuchse (12), welche mit einem Innengewinde (13) zum Verschrauben der Wechselbuchse (12) mit dem Gewindebolzen (1B) versehen ist,
- einen drehbar in dem Stützrohr (8) angeordneten und mit der Gewindemutter (3) kraft- oder formschlüssig verbindbaren Mitnehmer (16),
**dadurch gekennzeichnet, dass** Bestandteile der Sicherheitseinrichtung (30) eine Gewindehülse (31) und ein Schutzarm (32) sind, dass die Gewindehülse (31) außerhalb des Zylindergehäuses (7) und des Stützrohrs (8) angeordnet und mit einem Innengewinde (33) für einen Eingriff an einem dem Gewindebolzen (1B) benachbarten Gewindebolzen (1C) ausgebildet ist, und dass der Schutzarm (32) an der Gewindehülse (31) befestigt ist und sich bis über das Zylindergehäuse (7) der Spannvorrichtung (11) erstreckt.

2. Anordnung nach Anspruch 1, **dadurch gekennzeichnet, dass** sich der Schutzarm (32) bis über die dem Stützrohr (8) abgewandte Stirnseite (17) des Zylindergehäuses (7) erstreckt.

3. Anordnung nach Anspruch 2, **dadurch gekennzeichnet, dass** an dem Schutzarm (32) spannvorrichtungsseitig eine an die Stirnseite (17) des Zylindergehäuses (7) angepasste Formschlussplatte (40) angeordnet ist.

4. Anordnung nach Anspruch 3, **dadurch gekennzeichnet, dass** sich die Formschlussplatte (40) über die gesamte Stirnseite (17) erstreckt.

5. Anordnung nach Anspruch 3, **dadurch gekennzeichnet, dass** sich die Formschlussplatte (40) nur über einen Teil der Stirnseite (17) erstreckt.

6. Anordnung nach Anspruch 1 oder 2, **dadurch gekennzeichnet, dass** der Schutzarm (32) eine Öffnung (15A) aufweist, die einen Antriebsabschnitt (14) der Spannvorrichtung (11) freilegt.

7. Anordnung nach Anspruch 6 in Verbindung mit Anspruch 3, **dadurch gekennzeichnet, dass** die Formschlussplatte (40) eine zu der Öffnung (15A) des Schutzarms (32) fluchtende Öffnung (15B) aufweist.

8. Anordnung nach einem der vorhergehenden Ansprüche, **dadurch gekennzeichnet, dass** der Schutzarm (32) quer zu der Achse (A) des Zylindergehäuses (7) verstellbar an der Gewindehülse (31) befestigt ist.

9. Anordnung nach einem der vorhergehenden Ansprüche, **dadurch gekennzeichnet, dass** die Gewindehülse (31) um ihre Längsachse (B) drehbar gegenüber dem Schutzarm (32) ist.

10. Anordnung nach einem der Ansprüche 8 und/oder 9, **dadurch gekennzeichnet, dass** die Gewindehülse (31) eine umlaufende Nut (41) zur quer beweglichen Aufnahme des Schutzarms (32) aufweist.

11. Anordnung nach Anspruch 10, **dadurch gekennzeichnet, dass** die Nut (41) teils aus der Gewindehülse (31) und teils aus einem am schutzarmseitigen Ende der Gewindehülse (31) befestigten Endstück (42) gebildet ist.

12. Anordnung nach einem der vorhergehenden Ansprüche, **dadurch gekennzeichnet, dass** der benachbarte Gewindebolzen (1C) der unmittelbar nächste oder ein nicht unmittelbar nächster zu dem Gewindebolzen (1B) ist.

13. Anordnung nach einem der Ansprüche 1 bis 3, **dadurch gekennzeichnet, dass** der Schutzarm (32) und/oder die Formschlussplatte (40) eine gegenüber der Gewindehülse (31) verringerte Biegesteifigkeit aufweisen.

14. Anordnung nach einem der vorhergehenden Ansprüche, **dadurch gekennzeichnet, dass** Bestandteil der Gewindehülse (31) mindestens zwei, in einer Trennebene (50) aneinanderstoßende und zwischen einer Öffnungs- und einer Schließstellung beweglich zueinander geführte Segmente (51) sind, die die Gewindehülse (31) in einer Riegelstellung an dem Gewindebolzen (1C) festlegen oder in einer Freigabestellung freigeben.

15. Anordnung nach Anspruch 14, **dadurch gekennzeichnet, dass** die mindestens zwei zueinander beweglich geführten Segmente (51) in der Riegelstellung oder in der Freigabestellung durch einen in Richtung der Längsachse (B) der Gewindehülse (31) beweglichen Ring (52) arretiert werden.

## Claims

1. Arrangement of a tightening device (11) for a screw connection and a safety device (30) assigned to the tightening device (11), wherein the screw connection comprises a threaded bolt (1B) and a threaded nut (3) resting on a backing (5A), and wherein the tightening device (11) comprises at least
- a support tube (8) surrounding the threaded nut (3) and resting against the backing (5A),
- a cylinder housing (7) arranged in the extension of the support tube (8),
- a hydraulically driven piston (25) which is arranged in the cylinder housing (7) so as to be moveable along an axis (A),
- an exchangeable bush (12) which can be carried by a piston (25) on the axis (A) and is provided with an internal thread (13) for screwing the exchangeable bush (12) to the threaded bolt (1B),
- a carrier (16) which is arranged rotatably in the support tube (8) and can be connected to the threaded nut (3) by force fit or form fit,
**characterized in that** components of the safety device (30) are a threaded sleeve (31) and a protective arm (32), that the threaded sleeve (31) is arranged outside the cylinder housing (7) and the support tube (8), and is configured with an internal thread (33) for engagement on a threaded bolt (1C) adjacent to the threaded bolt (1B), and that the protective arm (32) is attached to the threaded sleeve (31) and extends over the cylinder housing (7) of the tightening device (11).

2. Arrangement according to Claim 1, **characterized in that** the protective arm (32) extends over the end face (17) of the cylinder housing (7) facing away from the support tube (8).

3. Arrangement according to Claim 2, **characterized in that** a form-fit plate (40), which is adapted to the end face (17) of the cylinder housing (7), is arranged on the protective arm (32) on the tightening device side.

4. Arrangement according to Claim 3, **characterized in that** the form-fit plate (40) extends over the entire end face (17).

5. Arrangement according to Claim 3, **characterized in that** the form-fit plate (40) extends only over part of the end face (17).

6. Arrangement according to Claim 1 or 2, **characterized in that** the protective arm (32) has an opening (15A) which exposes a drive portion (14) of the tightening device (11).

7. Arrangement according to Claim 6 in combination with Claim 3, **characterized in that** the form-fit plate (40) has an opening (15B) aligning with the opening (15A) of the protective arm (32).

8. Arrangement according to any of the preceding claims, **characterized in that** the protective arm (32) is attached to the threaded sleeve (31) so as to be adjustable transversely to the axis (A) of the cylinder housing (7).

9. Arrangement according to any of the preceding claims, **characterized in that** the threaded sleeve (31) is rotatable about its longitudinal axis (B) relative to the protective arm (32).

10. Arrangement according to Claim 8 and/or 9, **characterized in that** the threaded sleeve (31) has a circumferential groove (41) for receiving the protective arm (32) in a transversely movable fashion.

11. Arrangement according to Claim 10, **characterized in that** the groove (41) is formed partly from the threaded sleeve (31) and partly from an end piece (42) attached to an end of the threaded sleeve (31) on the protective arm side.

12. Arrangement according to any of the preceding claims, **characterized in that** the adjacent threaded bolt (1C) is the one which is directly next to or one which is not directly next to the threaded bolt (1B).

13. Arrangement according to any of Claims 1 to 3, **characterized in** the protective arm (32) and/or the form-fit plate (40) has a bending strength which is lower than that of the threaded sleeve (31).

14. Arrangement according to any of the preceding claims, **characterized in that** the threaded sleeve (31) comprises at least two segments (51) which abut one another in a separating plane (50) and are guided so as to be movable relative to one another between an open position and a closed position, and which establish the threaded sleeve (31) in a locked position on the threaded bolt (1C) or release it in a released position.

15. Arrangement according to Claim 14, **characterized in that** the at least two segments (51) guided movably relative to one another, in the locked position or in the released position, are locked by a ring (52) which is movable in the direction of the longitudinal axis (B) of the threaded sleeve (31).

## Revendications

1. Agencement constitué par un dispositif de serrage (11) pour une liaison vissée par un dispositif de sécurité (30) associé au dispositif de serrage (11), la liaison vissée comprenant un goujon fileté (1B) et un écrou fileté (3) appuyé contre un support (5A), et le dispositif de serrage (11) présentant au moins
- un tube d'appui (8) entourant l'écrou fileté (3) et s'appuyant contre le support (5A),
- un boîtier de cylindre (7) agencé dans le prolongement du tube d'appui (8),
- un piston (25) entraîné hydrauliquement, qui est agencé dans le boîtier de cylindre (7) de manière à pouvoir se déplacer le long d'un axe (A),
- une douille interchangeable (12) apte à être entraînée par le piston (25) sur l'axe (A), qui est pourvue d'un taraudage (13) pour le vissage de la douille interchangeable (12) sur le goujon fileté (1B),
- un organe d'entraînement (16) agencé de manière à pouvoir tourner dans le tube de support (8) et apte à être relié à l'écrou fileté (3) par engagement en force ou par complémentarité de formes,
**caractérisé en ce que** les composants du dispositif de sécurité (30) sont un manchon fileté (31) et un bras de protection (32), **en ce que** le manchon fileté (31) est agencé à l'extérieur du boîtier de cylindre (7) et du tube de support (8) et est conçu avec un taraudage (33) pour un engagement avec un goujon fileté (1C) adjacent au goujon fileté (1B), et **en ce que** le bras de protection (32) est fixé au manchon fileté (31) et s'étend jusqu'au-dessus du boîtier de cylindre (7) du dispositif de serrage (11).

2. Agencement selon la revendication 1, **caractérisé en ce que** le bras de protection (32) s'étend au-delà de la face frontale (17) du boîtier de cylindre (7) qui est opposée au tube de support (8).

3. Agencement selon la revendication 2, **caractérisé en ce qu'**une plaque de forme ajustée (40) adaptée à la face frontale (17) du boîtier de cylindre (7) est agencée sur le bras de protection (32) du côté du dispositif de serrage.

4. Agencement selon la revendication 3, **caractérisé en ce que** la plaque de forme ajustée (40) s'étend sur toute la face frontale (17).

5. Agencement selon la revendication 3, **caractérisé en ce que** la plaque de fermeture de moule (40) ne s'étend que sur une partie de la face frontale (17).

6. Agencement selon la revendication 1 ou 2, **caractérisé en ce que** le bras de protection (32) présente une ouverture (15A) qui découvre une portion d'entraînement (14) du dispositif de serrage (11).

7. Agencement selon la revendication 6 en combinaison avec la revendication 3, **caractérisé en ce que** la plaque de forme ajustée (40) présente une ouverture (15B) alignée avec l'ouverture (15A) du bras de protection (32) .

8. Agencement selon l'une des revendications précédentes, **caractérisé en ce que** le bras de protection (32) est fixé de manière réglable au manchon fileté (31), transversalement à l'axe (A) du boîtier de cylindre (7).

9. Agencement selon l'une des revendications précédentes, **caractérisé en ce que** le manchon fileté (31) est mobile en rotation autour de son axe longitudinal (B) par rapport au bras de protection (32).

10. Agencement selon l'une des revendications 8 et/ou 9, **caractérisé en ce que** le manchon fileté (31) présente une gorge circonférentielle (41) destinée à recevoir le bras de protection (32) de manière mobile transversalement.

11. Agencement selon la revendication 10, **caractérisé en ce que** la gorge (41) est formée en partie par le manchon fileté (31) et en partie par une pièce d'extrémité (42) fixée à l'extrémité de la manchon fileté (31) côté bras de protection.

12. Agencement selon l'une des revendications précédentes, **caractérisé en ce que** le goujon fileté adjacent (1C) est le goujon fileté qui suit immédiatement le goujon fileté (1B) ou qui ne suit pas ce dernier.

13. Agencement selon l'une des revendications 1 à 3, **caractérisé en ce que** le bras de protection (32) et/ou la plaque de forme ajustée (40) présentent une rigidité en flexion réduite par rapport au manchon fileté (31).

14. Agencement selon l'une des revendications précédentes, **caractérisé en ce qu'**une partie du manchon fileté (31) comprend au moins deux segments (51) qui se rejoignent dans un plan de séparation (50) et sont guidés l'un par rapport à l'autre de manière mobile entre une position d'ouverture et une position de fermeture, et qui fixent le manchon fileté (31) sur le goujon fileté (1C) dans une position de verrouillage ou le libèrent dans une position de libération.

15. Agencement selon la revendication 14, **caractérisé en ce que** les au moins deux segments (51) guidés de manière mobile l'un par rapport à l'autre sont bloqués dans la position de verrouillage ou dans la position de libération par une bague (52) mobile dans la direction de l'axe longitudinal (B) du manchon fileté (31).
